# EUROPÄISCHE PATENTSCHRIFT

(11) **EP 2 233 010 B1**
(45) Veröffentlichungstag und Bekanntmachung des Hinweises auf die Patenterteilung: **25.02.2015**
(21) Anmeldenummer: 10151936.1
(22) Anmeldetag: 28.01.2010
(51) Int. Cl.: A23C 3/033, A23L 3/22

(54) **Verfahren zum Betrieb einer Pasteurisierungsanlage und Pasteurisierungsanlage**
Method for operating a pasteurisation assembly and pasteurisation assembly
Procédé destiné au fonctionnement d'une installation de pasteurisation et installation de pasteurisation

(30) Priorität: 03.02.2009 DE 102009007220
(43) Veröffentlichungstag der Anmeldung: 29.09.2010
(73) Patentinhaber: Krones AG, 93073 Neutraubling (DE)
(72) Erfinder: Scherer, Christoph Hans, 93053 Regensburg (DE); Feilner, Roland, 93055, Regensburg (DE)
(74) Vertreter: Grünecker, Kinkeldey, Stockmair & Schwanhäusser

(56) Entgegenhaltungen:
- EP-A1- 0 506 646
- EP-A1- 0 554 961
- DE-A1- 1 617 968
- DE-A1- 4 025 570

## Beschreibung

Die Erfindung betrifft ein Verfahren zum Betrieb einer Pasteurisierungsanlage sowie eine Pasteurisierungsanlage.

DE 1 617 968 A1 offenbart eine Anlage zur kontinuierlichen Wärmebehandlung eines flüssigen Produkts in einem Rohrleitungssystem mit Einrichtungen zum Erwärmen des Produkts und dessen Abkühlung sowie Einrichtungen zur Rückführung des Produkts zur Ausgangsstelle zu einer Nachbehandlung im Rohrleitungssystem, wenn das Produkt bei der ersten Behandlung nicht die gewünschte Wärmebehandlungstemperatur erricht hat. Der Wärmeübergang auf das bzw. von dem Produkt erfolgt nicht über das gleiche Produkt, sondern zweckmäßig über Wasser. Während einer Rückführung von Produkt wird darauf geachtet, dass keine blinden Abschnitte, die nicht an dem Umlauf teilnehmen, für das zu behandelnde Produkt auftreten.

Bei einer Pasteurisierung können durch eine kurze Hitzeeinwirkung Lebensmittelverderber wie Milchsäurebakterien und Hefen sowie viele krankheitserregende Bakterien wie beispielsweise Listerien oder Salmonellen zuverlässig abgetötet werden, wobei durch die kurze Dauer und die mäßige Temperatur eine wesentliche Veränderung des Geschmacks und der Zusammensetzung des Lebensmittels vermieden wird. Die Pasteurisierung kann unter Verwendung einer Kurzzeiterhitzungsanlage erfolgen, wobei beispielsweise zweistufige und dreistufige Kurzzeiterhitzungsanlagen zur Verfügung stehen.

In einer zweistufigen Kurzzeiterhitzungsanlage fördert eine Pumpe das zu pasteurisierende Medium in einen Wärmetauscher (Rekuperator), in dem es durch das von einer Heißhaltestrecke abfließende, pasteurisierte Medium erwärmt wird. In einem nachgeschalteten Wärmetauscher (Erhitzer) wird das zu pasteurisierende Medium in dem Primärkreislauf auf die endgültige Pasteurisierungstemperatur erhitzt, die dann in der Heißhaltestrecke im Wesentlichen konstant bleibt. Die Länge der Heißhaltestrecke und die Geschwindigkeit des Produktes bestimmt hierbei die Dauer der Kurzzeiterhitzung. Anschließend fließt das pasteurisierte Medium durch den Rekuperator und gibt dort, wie zuvor beschrieben, seine Wärme an das im Gegenstrom zufließende zu pasteurisierende Medium ab. Das pasteurisierte und auf eine Endtemperatur abgekühlte Medium fließt beispielsweise in einen Puffertank, der beispielsweise einer Abfüllanlage vorgeschaltet sein kann.

Eine dreistufige Kurzzeiterhitzungsanlage ist wie eine zweistufige Kurzzeiterhitzungsanlage aufgebaut, umfasst aber des Weiteren noch einen Kühlkreislauf, der zur weiteren Tiefkühlung des pasteurisierten Mediums verwendet werden kann.

Bei einer Produktionsunterbrechung in der Kurzzeiterhitzungsanlage, beispielsweise wenn durch eine auftretende Störung der Puffertank zu voll wird, oder vorgeschaltet Produktmangel ansteht kann statt des zu pasteurisierenden Mediums Wasser in den Kreislauf eingefüllt werden. Im aus der Praxis bekannten Stand der Technik wird der Wasserkreislauf während der Unterbrechung entweder weiter unter konstanten Produktionspa-rametern mit all dessen Verbrauchern betrieben, oder die sich im Wasserkreislauf befindende Anlage wird, um die Verbraucher einzusparen, komplett ausgeschaltet, d.h. der Sekundärkreislauf, der die Energie für den Erhitzer bereitstellt, wird ausgeschaltet und ebenso der Fluss des Wassers im Primärkreislauf und im Falle der dreistufigen Anlage auch der Kühlkreislauf. Dies hat zur Folge, dass sowohl das Abfahren, wie auch das Wiederanfahren der Anlage zur Produktionsaufnahme nur unter nicht produktionsgerechten Parametern erfolgen kann (PE-Unterschreitungen). Es ist nicht mehr gewährleistet, dass keine getränkeschädlichen Mikroorganismen in den hygienischen Bereich der Anlage bei diesem Verfahren gelangen können.

Der vorliegenden Erfindung liegt daher die Aufgabe zugrunde, ein Anhalten und Wiederanfahren der Anlage so zu gestalten, dass Vorbedingungen geschaffen werden, die ein rasches Wiederanfahren der Anlage zur unter Aufrechterhaltung der Produktionsbedingungen ermöglichen.

Diese Aufgabe wird gelöst mit einem Verfahren nach Anspruch 1 und einer Pasteurisierungsanlage nach Anspruch 16.

Bevorzugte Ausführungsformen sind in den abhängigen Ansprüchen offenbart.

Das erfindungsgemäße Verfahren zum Betrieb einer Pasteurisierungsanlage, wobei die Pasteurisierungsanlage einen Primärkreislauf für ein zu pasteurisierendes Medium und einen Sekundärkreislauf umfasst, wobei der Sekundärkreislauf als Heizkreislauf dient, um das zu pasteurisierende Medium im Primärkreislauf zu erhitzen, umfasst den Schritt des Betreibens des Primärkreislaufs und des Sekundärkreislaufs, wobei im Primärkreislauf das zu pasteurisierende Medium fließt und wobei im Sekundärkreislauf ein Heizmittel fließt, den Schritt des Ausschiebens des zu pasteurisierenden Mediums aus dem Primärkreislauf mittels einer Flüssigkeit, die in den Primärkreislauf eingebracht wird, den Schritt des Anhaltens des Flusses der Flüssigkeit in dem Primärkreislauf, nachdem der Primärkreislauf mit der Flüssigkeit gefüllt ist und den Schritt des Aufrechterhaltens des Flusses des Heizmittels in dem Sekundärkreislauf nach dem Anhalten des Flusses der Flüssigkeit in dem Primärkreislauf, bis zu und nach einer Wiederaufnahme des Flusses der Flüssigkeit in dem Primärkreislauf, den Schritt und den Zeitpunkt des Wiederanfahrens des Primärkreislaufes.

Durch das Betreiben des Sekundärkreislaufs, gerade nach dem Anhalten des Flusses der Flüssigkeit im Primärkreislauf, kann das Heizmittel im Sekundärkreislauf weiterhin erhitzt und/oder auf einer vorgegebenen Temperatur gehalten werden und so eine Hitzebarriere zwischen den beiden Hygienebereichen der Anlage geschaffen werden..

Der Primär- und Sekundärkreislauf müssen nicht notwendigerweise in sich geschlossene Kreisläufe sein, in denen eine Flüssigkeit oder ein Medium mehrfach umlaufen kann. Der Primärkreislauf umfasst etwa einen Vorlauf zu einem Wärmetauscher, die Strecke in einem Wärmetauscher und den Rücklauf vom Wärmetauscher, ohne dass jedoch der Rücklauf so an den Vorlauf angeschlossen sein muss, dass eine Flüssigkeit oder ein Medium von dem Rücklauf in den Vorlauf fließen muss. Vorzugsweise sind Rück- und Vorlauf des Primärkreislaufs jedoch auch so schaltbar, dass Flüssigkeit oder Medium aus dem Rücklauf in den Vorlauf geleitet werden kann. Der Sekundärkreislauf (Heizkreislauf) ist jedoch vorzugsweise ein in sich geschlossener Kreislauf.

Wird jedoch wie im aus der Praxis bekannten Stand der Technik die Anlage komplett ausgeschaltet, so kann der Primär- und der Sekundärkreislauf während der Stillstandzeit abkühlen. Werden der Primärkreislauf und der Sekundärkreislauf nach der Produktionsunterbrechung dann wieder angefahren, kann der Erhitzer nicht die geforderte Temperatur bereitstellen, um die Flüssigkeit auf Pasteurisierungstemperatur zu erhitzen. Dieser Effekt verstärkt sich über die Standzeit, da beide Kreisläufe über diese immer weiter abkühlen. Auf die Seite des Erhitzers (primärseitig), auf der sich aus mikrobiologischen Gesichtspunkten nur Flüssigkeit befinden sollte, die auf Pasteurisierungstemperatur erhitzt ist (sterile Seite), kann somit Flüssigkeit mit einer Temperatur unter der Pasteurisierungstemperatur gelangen. Dadurch kann es zu einer Verunreinigung durch Lebensmittelverderbern kommen, die eigentlich durch die Pasteurisierung abgetötet werden sollen.

Durch das Aufrechterhalten des Flusses und der Temperatur des Heizmittels in dem Sekundärkreislauf auch nach dem Anhalten des Flusses der Flüssigkeit in dem Primärkreislauf kann, wie im erfindungsgemäßen Verfahren, bei einer Wiederaufnahme des Flusses im Primärkreislauf die fließende Flüssigkeit bzw. das zu pasteurisierende Medium umgehend erhitzt werden.

Eine andere Möglichkeit, die Sterilität der sogenannten sterilen Seite zu gewährleisten, wäre, den Primärkreislauf einer zweistufigen Kurzzeiterhitzungsanlage mit Wasser zu füllen und einen Fluss des Wassers in einem internen Kreislauf herzustellen und den Erhitzerkreislauf weiter zu betreiben. Durch den nicht 100%-igen Wärmerückgewinn des Rekuperators wird das Wasser beim kontinuierlichen Umlauf pro Umlauf ständig um einen gewissen Temperaturbetrag aufgeheizt. Diese Erwärmung kann beispielsweise bis zu einer Temperatur von etwa 40°C geduldet werden, bei einer höheren Temperatur muss das erhitzte Wasser dann durch kaltes Wasser ersetzt werden, d.h. das erhitzte Wasser muss aus der Anlage abgelassen werden. Dies führt zu einem in Abhängigkeit von der Anlagengröße und der Dauer der Stillstandzeit, d.h. der Dauer des Betriebs des internen Kreislaufs, nicht zu vernachlässigbarem Wasserverbrauch.

Entsprechend könnte im Falle einer dreistufigen Kurzzeiterhitzungsanlage bei einer Produktionsunterbrechung der Primärkreislauf mit Wasser gefüllt und ein Fluss des Wassers in einem internen Kreislauf hergestellt, der Erhitzerkreislauf und der Kühlkreislauf weiter betrieben werden. Durch den Kühlkreislauf kann eine Erhitzung des umlaufenden Wassers pro Umlauf durch den nicht 100%-igen Wärmerückgewinn des Rekuperators vermieden werden, wodurch ein Austausch des Wassers entfällt. Jedoch muss die Wärmerückgewinnungsdifferenz durch eine entsprechende Kühlleistung erbracht werden, was einen gewissen Energieverbrauch erfordert.

Die Erfindung bietet somit ein vergleichsweise energie- und/oder wassersparendes Verfahren zum Betrieb einer Pasteurisierungsanlage, auch unter mikrobiologischen Gesichtspunkten.

Das zu pasteurisierende Medium kann beispielsweise Milch, Bier, Saft oder ein anderes flüssiges Lebensmittel oder flüssige Tiernahrung umfassen. Die Flüssigkeit, die in den Primärkreislauf eingebracht wird, um zu pasteurisierendes Medium auszuschieben, kann vorteilhafterweise Wasser sein. Bei diesem Ausschieben kann sich eine Mischphase aus Flüssigkeit und zu pasteurisierendem Medium ergeben, die beispielsweise in einen Tank verbracht oder auf einen Gully ausgeschoben werden kann, um entsorgt oder anderweitig verwendet zu werden.

Eine Temperatur eines Wärmetauschers (ersten Wärmetauschers) kann ermittelt werden, beispielsweise mittels eines Temperatursensors, wobei der Wärmetauscher einen thermischen Kontakt zwischen dem Primärkreislauf und dem Sekundärkreislauf ermöglichen kann. Um ein ordnungsgemäßes Pasteurisieren des zu pasteurisierenden Mediums zu gewährleisten, ist es zweckmäßig, die Temperatur des Wärmetauschers zu ermitteln, da durch diesen Wärmetauscher die notwendige Energie an das zu pasteurisierende Medium übergeben werden kann.

Der hier verwendete Ausdruck "Temperatur des Wärmetauschers" bezieht sich auf diejenige Temperatur, die am Einlauf des Wassers des Sekundärkreislaufs in den Wärmetauscher bestimmt/gemessen wird.

Es können Mittel, wie beispielsweise eine automatische Steuerung vorgesehen sein, die in Abhängigkeit von der ermittelten Temperatur des Wärmetauschers bei eventuellen Abweichungen von einer Solltemperatur, die Temperatur des Wärmetauschers entsprechend erhöhen oder absenken. Auch kann die Steuerung dafür vorgesehen sein, die Temperatur des Wärmetauschers konstant zu halten.

Eine erste Temperatur des Wärmetauschers kann, beispielsweise mittels eines Temperatursensors, beim Betreiben des Primärkreislaufs und des Sekundärkreislaufs ermittelt werden. Diese erste Temperatur des Wärmetauschers entspricht der unter Produktionsbedingungen vorherrschenden Temperatur. Unter Produktionsbedingungen ist hierbei beispielsweise zu verstehen, dass der Fluss des zu pasteurisierenden Mediums/pasteurisierten Mediums im Primärkreislauf und des Heizmittels im Sekundärkreislauf ohne Störung erfolgt.

Eine zweite Temperatur des Wärmetauschers kann nach dem Anhalten des Flusses der Flüssigkeit in dem Primärkreislauf und dem Aufrechterhalten des Flusses des Heizmittels in dem Sekundärkreislauf ermittelt werden, wobei die zweite Temperatur höher als die erste Temperatur sein kann. Wie weiter unten beschrieben, kann es bei einer Produktionsunterbrechung nötig sein, die Temperatur des Wärmetauschers zu erhöhen, wodurch nach dem Anhalten des Flusses der Flüssigkeit in dem Primärkreislauf und dem Aufrechterhalten des Flusses des Heizmittels in dem Sekundärkreislauf eine entsprechend höhere Temperatur, die zweite Temperatur, des Wärmetauschers ermittelt, d.h. gemessen, wird.

Bei einem Verfahren kann die (Soll-)Temperatur des Wärmetauschers als Funktion einer Stillstandzeit des Primärkreislaufs erhöht werden. Je länger die Stillstandzeit des Primärkreislaufs ist, desto mehr kann die Flüssigkeit in dem Primärkreislauf abkühlen, da die Flüssigkeit nicht mehr durch den Wärmetauscher fließt und daher keine Energie aufnehmen kann, die ihre Temperatur erhöhen würde. Durch die Erhöhung der Temperatur des Wärmetauschers als Funktion der Stillstandzeit des Primärkreislaufs kann man somit der verlorenen Energie im Primärkreislauf effektiv entgegensteuern, ohne eine Regleraufschwingung im Falle einer zu hohen Temperatur im Sekundärkreislauf zu provozieren..

Beim Betreiben des Primärkreislaufs und des Sekundärkreislaufs kann vorgesehen sein, dass pasteurisiertes Medium in einem weiteren Wärmetauscher (zweiter Wärmetauscher) rekuperativ in einem Gegenstrom Wärme an das zu pasteurisierende Medium abgibt, das in den zweiten Wärmetauscher einfließt, so dass dieses um einen gewissen Temperaturbetrag vorgewärmt wird, bevor es den ersten Wärmetauscher (Erhitzer) durchfließt. Dieses Vorwärmen kann erforderlich sein, um nach Durchfließen des ersten Wärmetauschers die erforderliche Pasteurisierungstemperatur zu erreichen.

Wird der Primärkreislauf mit einer Flüssigkeit gefüllt und wird nach beendeter Füllung der Fluss der Flüssigkeit angehalten, so kann es wie oben beschrieben zu einer Abnahme der Temperatur der Flüssigkeit in der Heisshaltestrecke kommen. Um nun bei einer Wiederaufnahme des Flusses der Flüssigkeit zu gewährleisten, dass die Flüssigkeit nach Durchfließen des ersten Wärmetauschers die Pasteurisierungstemperatur erreicht, kann der erste Wärmetauscher eine höhere Temperatur, als im Falle des Betriebs von Primärkreislauf und Sekundärkreislauf, aufweisen, da die Flüssigkeit, die durch den ersten Wärmetauscher fließt, nicht vorgewärmt ist.

Die Erhöhung der (Soll-) Temperatur des Sekundärkreislaufes als Funktion der Stillstandzeit ist vorteilhaft, da auf diese Weise gewährleistet werden kann, dass sich nach dem ersten Wärmetauscher nur pasteurisierte Flüssigkeit und/oder pasteurisiertes Medium befinden kann. Somit kann vermieden werden, dass nach einer Produktionsunterbrechung die sogenannte sterile Seite durch nicht-pasteurisierte Flüssigkeit und/oder nichtpasteurisiertes Medium verunreinigt wird.

Die Erhöhung der Temperatur des Sekundärkreislaufes als Funktion der Stillstandzeit des Primärkreislaufs kann beispielsweise bedeuten, dass die Temperatur einer mathematischen Funktion folgend mit zunehmender Stillstandzeit erhöht wird. Auch kann die Temperatur stufenartig für entsprechende Stillstandzeitbereiche erhöht werden.
Zudem kann/muss die Stillstandzeit bei Unterschreitung einer gesetzten Minimumtemperatur in der Heisshaltestrecke, durch ein automatisches Wiederanfahren, oder manuell vom Bediener anwählbar beendet werden. Die gesetzte Minimumtemperatur ist so gewählt, dass ab Erreichen dieser im Sekundärkreislauf trotz erhöhter Temperatur die Energie nicht mehr bereit gestellt werden kann um den Primärstrom beim Wiederanfahren auf Pasteurisationstemperatur zu erhitzen.

Eine Temperatur einer Heißhaltestrecke, die vom Primärkreislauf umfasst wird, kann, beispielsweise mittels eines Temperatursensors, ermittelt werden. In der Heißhaltestrecke kann beim Betrieb der Pasteurisierungsanlage eine erreichte Pasteurisierungstemperatur des zu pasteurisierenden Mediums konstant gehalten werden. Die Länge der Heißhaltestrecke und die Geschwindigkeit des Produktes, die sich aus dem Leitungsquerschnitt und der Anlagenleistung errechnet, kann hierbei die Zeitdauer der Aufrechterhaltung der Pasteurisierungstemperatur bestimmen. Für eine vorgegebene Durchflussrate ist bei einer größeren Länge der Heißhaltestrecke ist die Zeitdauer der Aufrechterhaltung der Pasteurisierungstemperatur größer im Vergleich zu einer kürzeren Länge der Heißhaltestrecke.

Ist der Fluss der Flüssigkeit in dem Primärkreislauf angehalten, so durchfließt diese Flüssigkeit nicht mehr den ersten Wärmetauscher, in dem die Flüssigkeit auf Pasteurisierungstemperatur aufgeheizt würde. In der Heißhaltestrecke, die sich anschließend an den ersten Wärmetauscher befinden kann, befindet sich zwar unmittelbar nach Anhalten des Flusses der Flüssigkeit in dem Primärkreislauf noch Flüssigkeit mit einer Pasteurisierungstemperatur, aber diese Flüssigkeit kühlt im Laufe der Zeit ab, so dass die Temperatur unter die Pasteurisierungstemperatur sinkt.

Daher ist es vorteilhaft, die vorherrschende Temperatur in der Heißhaltestrecke zu ermitteln, d.h. zu messen, um beispielsweise die (Soll-)Temperatur des Sekundärkreislaufes entsprechend erhöhen zu können, damit nach einer Wiederaufnahme des Flusses der Flüssigkeit im Primärkreislauf nur Flüssigkeit mit einer Pasteurisierungstemperatur den ersten Wärmetauscher verlässt.

Die Temperatur des Sekundärkreislaufes kann als Funktion der Temperatur in der Heißhaltestrecke erhöht werden. Da wie oben beschrieben die Temperatur der Flüssigkeit in der Heißhaltestrecke während der Produktionsunterbrechung abnimmt, und diese Abnahme beispielsweise abhängig oder unabhängig von der Stillstandzeit erfolgen kann, kann die Temperatur des Sekundärkreislaufes als Funktion der Temperatur in der Heißhaltestrecke erhöht werden, da auf diese Weise gewährleistet werden kann, dass den Wärmetauscher nur pasteurisierte Flüssigkeit und/oder pasteurisiertes Medium verlassen kann, wodurch eine Verunreinigung der sterilen Seite durch nicht-pasteurisierte Flüssigkeiten verhindert werden kann.

Die Erhöhung der (Soll-)Temperatur des Sekundärkreislaufes als Funktion der Temperatur in der Heißhaltestrecke kann beispielsweise proportional zur Abnahme der Temperatur in der Heißhaltestrecke erfolgen. Es ist auch möglich, die (Soll-)Temperatur stufenartig für entsprechende Temperaturbereiche der Temperatur der Heißhaltestrecke zu erhöhen.

Der Fluss der Flüssigkeit in dem Primärkreislauf kann aufgenommen werden, wobei zu pasteurisierendes Medium in den Primärkreislauf eingebracht werden kann und wobei durch dieses Einbringen die Flüssigkeit aus dem Primärkreislauf ausgeschoben werden kann. Eine Mischphase, die sich aus zu pasteurisierendem Medium und Flüssigkeit ergeben kann, kann beispielsweise in einen Auffangbehälter verbracht werden, um entsorgt, anderweitig verwendet oder auf einen Gully geschoben zu werden.

Das zu pasteurisierende Medium kann einen zweiten Wärmetauscher durchfließen, der vom Primärkreislauf umfasst sein kann, und kann in Abhängigkeit von der Temperatur des ersten Wärmetauschers seine Temperatur beibehalten oder auf eine Temperatur vorgewärmt werden.

Somit kann das zu pasteurisierende Medium beispielsweise vorgewärmt werden, bevor es den ersten Wärmetauscher durchfließt. Weist der erste Wärmetauscher beispielsweise nach der Wiederaufnahme des Flusses der Flüssigkeit in dem Primärkreislauf eine erhöhte Temperatur auf gegenüber dem Betreiben des Primärkreislaufs und des Sekundärkreislaufs auf, so kann das zu pasteurisierende Medium auf eine entsprechend kleinere Temperatur vorgewärmt werden.

Die Temperatur des Sekundärkreislaufes kann nach der Wiederaufnahme des Flusses der Flüssigkeit in dem Primärkreislauf auf den Wert der ersten Temperatur abgesenkt werden. Die im Vergleich zum Betreiben des Primärkreislaufs und des Sekundärkreislaufs niedrigere Temperatur der den ersten Wärmetauscher durchfließenden Flüssigkeit, da die Flüssigkeit nicht vorgewärmt ist, kann durch die höhere zweite Temperatur des ersten Wärmetauschers auf die Pasteurisierungstemperatur erhöht werden. Im Gegenstrom im zweiten Wärmetauscher gibt die pasteurisierte Flüssigkeit Wärme an das einfließende zu pasteurisierende Medium ab, das dadurch vorgewärmt wird. Somit kann es vorteilhaft sein, die Temperatur des Sekundärkreislaufes nach der Wiederaufnahme des Flusses der Flüssigkeit in dem Primärkreislauf auf die erste Temperatur abzusenken, damit das zu pasteurisierende Medium nicht über die Pasteurisierungstemperatur hinaus erhitzt wird. Zudem kann durch Absenkung der Temperatur des ersten Wärmetauschers Energie eingespart werden.

Mittels eines weiteren Wärmetauschers (dritten Wärmetauschers) kann in dem Sekundärkreislauf das Heizmittel erhitzt, abgekühlt oder auf einer konstanten Temperatur gehalten werden. Dieser dritte Wärmetauscher kann in thermischen Kontakt zu einem Dampf-Kondensat-Kreislauf stehen. Der Dampf-Kondensat-Kreislauf kann durch Dampf, beispielsweise Wasserdampf, oder Hochdruckheisswasser, Energie bereitstellen, die mittels des dritten Wärmetauschers an den Sekundärkreislauf der Pasteurisierungsanlage übertragen werden kann.

Es können aber auch andere Mittel vorgesehen sein, um das Heizmittel in dem Sekundärkreislauf zu erhitzen, abzukühlen oder auf einer konstanten Temperatur zu halten, wodurch die Verwendung eines Dampf-Kondensat-Kreislaufs und/oder eines dritten Wärmetauschers nicht notwendig ist.

Beim Betreiben des Primärkreislaufs und des Sekundärkreislaufs kann zudem ein Kühlkreislauf, in dem ein Kühlmittel fließen kann, betrieben werden. Bei einem Anhalten des Flusses der Flüssigkeit in dem Primärkreislauf kann auch der Fluss des Kühlmittels in dem Kühlkreislauf angehalten werden.

Der Kühlkreislauf kann zum Abkühlen des pasteurisierten Mediums verwendet werden. Als Kühlmittel kann beispielsweise Eiswasser und/oder Glykol verwendet werden.

Der Fluss des Kühlmittels in dem Kühlkreislauf kann nach oder bei Aufnahme des Flusses der Flüssigkeit in dem Primärkreislauf aufgenommen werden.

Beim Betreiben des Primärkreislaufs und des Sekundärkreislaufs und somit beim Betreiben des Kühlkreislaufs kann das pasteurisierte Medium bei Durchfließen eines weiteren Wärmetauschers abgekühlt werden, wobei dieser Wärmetauscher einen thermischen Kontakt zu dem Kühlkreislauf ermöglichen kann.

In einer vorteilhaften Ausführung der erfindungsgemäßen Pasteurisierungsanlage, die einen Primärkreislauf und einen Sekundärkreislauf umfassen kann, kann eine Steuerung vorgesehen sein zum Durchführen eines der oben angeführten Verfahren.

Weitere Vorteile und Merkmale der vorliegenden Erfindung ergeben sich aus der nachfolgenden Beschreibung bevorzugter Ausführungsbeispiele sowie anhand der Figuren. Die Figuren zeigen hierbei:
Figur 1: schematische Darstellung einer zweistufigen Pasteurisierungsanlage;
Figur 2: schematische Darstellung einer dreistufigen Pasteurisierungsanlage;
Figur 3: Temperatur-Zeit-Verlauf am ersten Wärmetauscher.

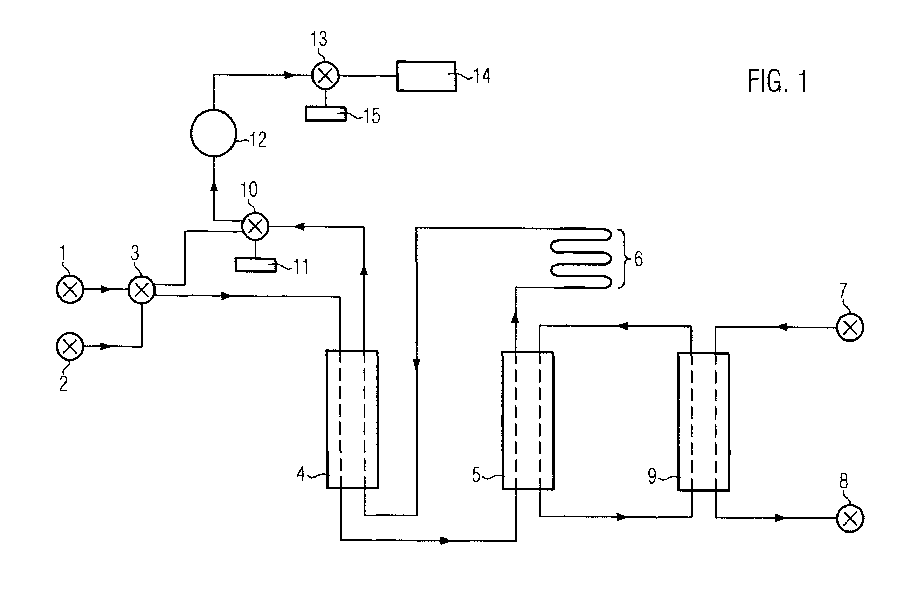

Figur 1 zeigt eine schematische Darstellung einer zweistufigen Pasteurisierungsanlage.

Mittels des Einlasses 1 und des Einlasses 2 können Flüssigkeiten in einen Primärkreislauf der Pasteurisierungsanlage eingebracht werden. Die Flüssigkeit kann durch ein Ventil 3 zu einem und durch einen Wärmetauscher (Rekuperator) 4 und danach zu einen und durch einen nachgeschalteten Wärmetauscher (Erhitzer) 5 fließen. Dann kann die Flüssigkeit eine Heißhaltestrecke 6 durchfließen, bevor sie im Gegenstrom zur zufließenden Flüssigkeit den Rekuperator 4 durchfließen und zu einem Ventil 10 kommen kann.

Von dort kann die Flüssigkeit in einen Auffangbehälter 11, zurück zum Ventil 3 oder zu einem Puffertank 12 fließen. Die Verbindung zwischen Ventil 10 und 3 kann jedoch auch entfallen, sowie die Möglichkeit das Ventil 10 zum Ventil 3 hin zu öffnen. Der Puffertank 12 kann einer Abfüllanlage 14 und einem Auffangbehälter 15 vorgeschaltet sein, wobei der Zugang zu der Abfüllanlage und dem Auffangbehälter mittels eines Ventils 13 erfolgen kann.

In einem Sekundärkreislauf der Pasteurisierungsanlage kann erhitztes Heizmittel, beispielsweise Wasser, fließen, wodurch der Sekundärkreislauf als Heizkreislauf dienen kann. Das Heizmittel kann durch den Erhitzer 5, in dem es Energie abgegeben kann, und durch einen weiteren Wärmetauscher (Heißwasserbereiter) 9, in dem es Energie aufnehmen kann, fließen. Der Heißwasserbereiter 9 kann in thermischen Kontakt zu einem Dampf-Kondensat-Kreislauf stehen, in den über ein Ventil 7 Dampf eingebracht und über ein anderes Ventil 8 Kondensat abgelassen werden kann. Beispielsweise kann Wasserdampf verwendet werden.

Bei einem Betrieb der zweistufigen Pasteurisierungsanlage zur Erzeugung von pasteurisiertem Medium (Betrieb unter Produktionsbedingungen), werden Primärkreislauf, Sekundärkreislauf und Dampf-Kondensat-Kreislauf betrieben, d.h. in diesen Kreisläufen fließt zu pasteurisierendes Medium/pasteurisiertes Medium/Flüssigkeit bzw. Heizmittel bzw. Dampf und Kondensat. Beispielsweise wird durch den Einlass 1 zu pasteurisierendes Medium in den Primärkreislauf verbracht, wobei dieses Verbringen mittels einer Pumpe oder dergleichen erfolgen kann. Das zu pasteurisierende Medium durchfließt zuerst den Rekuperator 4 sowie den Erhitzer 5. In dem Rekuperator 4 kann das zu pasteurisierende Medium von zuvor bereits pasteurisiertem Medium im Gegenstrom vorgewärmt werden, beispielsweise auf eine Temperatur von 40 °C bis 50 °C wie etwa 45 °C, und kann im Erhitzer 5 von heißem Wasser im Gegenstrom auf eine Temperatur von beispielsweise 72°C (Pasteurisierungstemperatur) gebracht werden, wobei der Erhitzer 5 eine Temperatur T₁ aufweisen kann.

Danach, d.h. nach Durchfließen des Erhitzers 5, fließt das auf Pasteurisierungstemperatur erhitzte Medium in und durch eine Heißhaltestrecke 6, die beispielsweise als Röhrensystem ausgebildet sein kann. Die Länge der Heißhaltestrecke 6 kann die Zeitdauer der Aufrechterhaltung der Pasteurisierungstemperatur bestimmen. Bei einer größeren Länge der Heißhaltestrecke 6 ist die Zeitdauer der Aufrechterhaltung der Pasteurisierungstemperatur größer als im Vergleich zu einer kürzeren Länge der Heißhaltestrecke 6.

Die Pasteurisierungstemperatur kann in Abhängigkeit von der Länge der Heißhaltestrecke, d.h. in Abhängigkeit von der Erhitzungsdauer, verschiedene Werte besitzen. Für die Pasteurisierung von Milch kann bei einer Erhitzungsdauer von 4 bis 10 Sekunden die Pasteurisierungstemperatur 85°C und bei einer Erhitzungsdauer von 30 bis 40 Sekunden 72 - 75°C betragen.

Nach Durchfließen der Heißhaltestrecke 6 fließt das nun pasteurisierte Medium im Gegenstrom durch den Rekuperator 4, in dem es Wärme an das nachfließende, kalte zu pasteurisierende Medium abgibt. Das pasteurisierte Medium fließt weiter durch die Pasteurisierungsanlage bis beispielsweise zu einem Ventil 10. Unter Produktionsbedingungen ist das Ventil 10 vorzugsweise so eingestellt, dass das pasteurisierte Medium zu einem Puffertank 12 fließen kann, in dem es gespeichert werden kann.

Der Puffertank 12 kann zum Ausgleich von Leistungsschwankungen einer Abfüllanlage 14 vorgesehen sein. Wird beispielsweise mehr pasteurisiertes Medium erzeugt als von der Abfüllanlage 14 zu einer gegeben Zeit verarbeitet werden kann, so kann pasteurisiertes Medium, das in dieser Zeit nicht abgefüllt werden kann, im Puffertank 12 gespeichert werden. Wird beispielsweise die Kapazität der Abfüllanlage 14 erhöht oder geht die Produktion des pasteurisierten Mediums zurück, so kann durch den Puffertank 12 gewährleistet werden, dass weiterhin pasteurisiertes Medium zum Abfüllen bereitsteht.

Beispielsweise kann das pasteurisierte Medium anstatt zur Abfüllanlage 14 zu fließen mittels eines Ventils 13 zu einem Auffangbehälter 15 umgeleitet werden. Dieser Auffangbehälter 15 kann als Abfallbehälter vorgesehen sein, um beispielsweise pasteurisiertes Medium in dem Fall entsorgen zu können, beispielsweise falls der Puffertank 12 voll ist.

Um beispielsweise den Puffertank 12 leeren zu können, kann die Produktion von pasteurisiertem Medium unterbrochen werden. Dabei kann das Ventil 10 in der Zuleitung zu dem Puffertank 12 geschlossen werden, um einen Fluss zum Puffertank 12 hin zu unterbrechen. Stattdessen kann das Ventil 10 einen Fluss zu einem Auffangbehälter 11 ermöglichen. Bei einer Produktionsunterbrechung kann statt des zu pasteurisierenden Mediums beispielsweise Wasser über einen Einlass 2 und durch ein Ventil 3 in den Primärkreislauf verbracht werden. D.h. das Verbringen von zu pasteurisierendem Medium in den Primärkreislauf über den Einlass 1 wird gestoppt und ein Verbringen von Wasser in den Primärkreislauf über den Einlass 2 wird gestartet.

Der Sekundärkreislauf und der Dampf-Kondensat-Kreislauf werden weiterhin betrieben.

Zu Beginn des Produktionsstopps befinden sich somit Wasser, zu pasteurisierendes Medium und pasteurisiertes Medium in dem Primärkreislauf. Diese Mischphase kann über das Ventil 10 in den Auffangbehälter 11 verbracht werden, um beispielsweise entsorgt zu werden. Wurde soviel Wasser in den Primärkreislauf verbracht, dass zu pasteurisierendes Medium und pasteurisiertes Medium sowie Mischphasen (Mischungen aus Wasser und/oder zu pasteurisierenden Medium und/oder pasteurisiertem Medium) vollständig aus dem Primärkreislauf in den Auffangbehälter 11 verbracht wurden, so kann der Zugang zum Auffangbehälter 11 geschlossen werden und beispielsweise eine Verbindung zwischen Ventil 10 und Ventil 3 geöffnet werden, wodurch ein in sich geschlossener interner Kreislauf entsteht.

Sobald dieser Kreislauf mit Wasser gefüllt ist, wird der Primärkreislauf gestoppt, d.h. es findet kein Fluss des Wassers innerhalb des Primärkreislaufs mehr statt.

Statt des Öffnens der Strecke zwischen Ventil 10 und 3 kann auch die Strömung im Primärkreislauf gestoppt werden, wenn das Ventil 10 zum Auffangbehälter 11 hin geöffnet ist, also Wasser aus dem Ventil 2 durch den Rekuperator 4 und den Wärmetauscher 5, sowie die Heißhaltestrecke 6 zu dem Ventil 10 und von dort in den Auffangbehälter 11 fließt.

Zwischen Ventil 3 und Rekuperator 4 weist das Wasser eine niedrige Eingangstemperatur auf, beispielsweise 12°C, zwischen Rekuperator und Erhitzer ist das Wasser vorgewärmt, beispielsweise auf 45°C, zwischen Erhitzer 5 und Rekuperator 4 (in der Heißleiterstrecke 6) besitzt das Wasser Pasteurisierungstemperatur, zwischen Rekuperator 4 und Ventil 10 bzw. Ventil 3 besitzt das Wasser eine Temperatur, die wegen des nicht 100%-igen Wärmerückgewinns des Rekuperators etwas oberhalb der Eingangstemperatur liegt, beispielsweise bei 16°C.

Der Bereich zwischen Erhitzer 5 und Puffertank 12 bzw. Abfüllanlage 14 wird als steriler Bereich bezeichnet. In diesem Bereich sollen sich nur Flüssigkeiten befinden, die pasteurisiert sind. Da der Fluss des Wassers im Primärkreislauf gestoppt ist, kann das Wasser im Rekuperator 4 und im Erhitzer 5 keine Wärme aufnehmen, und somit kommt es bei einem Produktionsstopp zu einer Abkühlung des Wassers im Kreislauf, beispielsweise in der Heißhaltestrecke 6.

Um nun zu gewährleisten, dass unmittelbar nach Wiederaufnahme des Flusses im Primärkreislauf pasteurisiertes Wasser und/oder pasteurisiertes Medium erzeugt werden kann, wird der Erhitzer 5 auf eine Temperatur T₂ gebracht, die höher ist als die Temperatur T₁, die bei einem Betrieb unter Produktionsbedingungen vorherrscht. Da das Wasser, das den Erhitzer 5 nach der Wiederaufnahme des Flusses durchfließt, nicht in der Höhe vorgewärmt ist bzw. vorgewärmt werden kann wie vor dem Produktionsstopp, muss es im Erhitzer 5 mehr Wärme aufnehmen im Vergleich zu bereits vorgewärmtem Wasser. Diese größere Wärmemenge wird durch die höhere Temperatur T₂ des Erhitzers 5 zur Verfügung gestellt. Somit kann unmittelbar nach Wiederaufnahme des Flusses im Primärkreislauf Wasser und/oder Medium mit einer Pasteurisierungstemperatur den Erhitzer 5 verlassen. Wichtig ist hierbei nicht, ob es sich um Wasser und/oder Medium handelt, sondern wichtig ist, dass die Flüssigkeit Pasteurisierungstemperatur besitzt. Somit bleibt die Sterilität im Bereich zwischen Erhitzer 5 und Puffertank 12 bzw. Abfüllanlage 14 erhalten.

Wurde der Puffertank 12 geleert oder eine andere Ursache, die einen Produktionsstopp erforderte, behoben, so kann der Fluss des Primärkreislaufs wieder aufgenommen werden. Dazu kann der Zugang zum Auffangbehälter 11 geöffnet und/oder die Verbindung zwischen den Ventilen 3 und 10 geschlossen werden. Das sich im Primärkreislauf befindliche Wasser kann durch zu pasteurisierendes Medium, dass in den Primärkreislauf über den Einlass 1 und das Ventil 3 verbracht wird, in den Auffangbehälter 11 verbracht werden. Der Zugang zu dem Auffangbehälter 11 kann geschlossen und der Zugang zu dem Puffertank 12 geöffnet werden, wenn sich kein Wasser oder keine Mischphase mehr in dem Primärkreislauf befindet. Die Produktion von pasteurisiertem Medium ist somit wieder möglich.

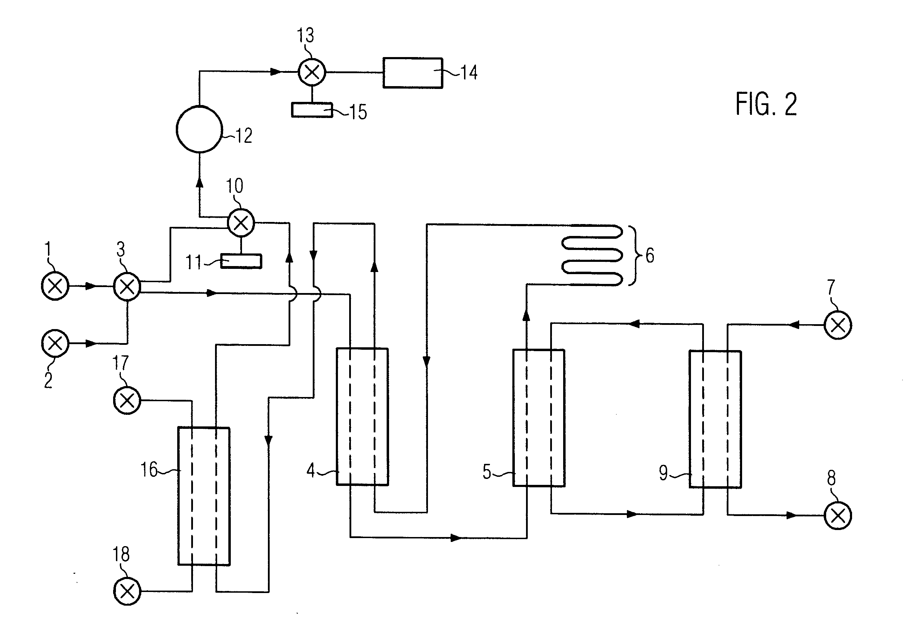

Figur 2 zeigt eine schematische Darstellung einer dreistufigen Pasteurisierungsanlage. Im Vergleich zu der zweistufigen Pasteurisierungsanlage umfasst die dreistufige Pasteurisierungsanlage noch einen Kühlkreislauf, der über einen Wärmetauscher 16 in thermischen Kontakt mit dem Primärkreislauf im Bereich zwischen Rekuperator 4 und Ventil 10 steht, wodurch beispielsweise pasteurisiertes Medium abgekühlt werden kann. In den Kühlkreislauf kann durch ein Ventil 17 Kühlmittel eingebracht werden und kann nach Durchfließen eines Wärmetauschers (Kühler) 16 durch ein Ventil 18 abgelassen werden.

Im Falle eines Produktionsstopps wird der Fluss in dem Kühlkreislauf gestoppt und bei einer Wiederaufnahme des Flusses im Primärkreis auch wieder aufgenommen. Abgesehen davon verläuft der Betrieb der dreistufigen Pasteurisierungsanlage unter Produktionsbedingungen und bei Produktionsstopp wie bei der zweistufigen Pasteurisierungsanlage.

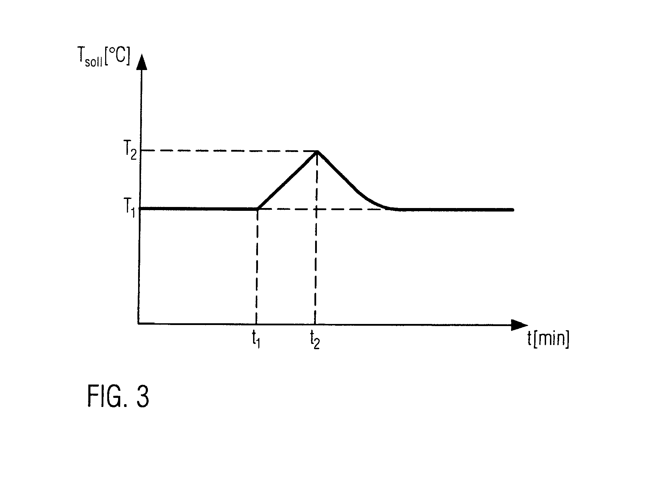

Figur 3 zeigt in einem beispielhaften Temperatur-Zeit-Diagramm den Verlauf der Solltemperatur Tₛₒₗₗ des Erhitzers 5 in Abhängigkeit von der Zeit t. Bis zu einer Zeit t₁ werden Primärkreislauf und Sekundärkreislauf der Pasteurisierungsanlage betrieben, wobei der Erhitzer 5 bis zur Zeit t₁ eine konstante Temperatur T₁ aufweist.

Nach einem Abschalten des Primärkreislaufs zur Zeit t₁ wird der Fluss der Flüssigkeit in dem Primärkreislauf bis zu einer Zeit t₂ angehalten. Während dieser Zeitspanne t₂ - t₁ wird die Temperatur des Erhitzers 5 bis auf eine Temperatur T₂ erhöht. Die Erhöhung der Temperatur kann wie gezeigt in linearer Abhängigkeit von der Zeit erfolgen, auch ist eine Abhängigkeit von der Temperatur in der Heisshaltestrecke möglich.

Zur Zeit t₂ wird der Fluss der Flüssigkeit im Primärkreislauf wieder aufgenommen. Im Anschluss daran kann die Temperatur des Erhitzers 5 wieder abgesenkt werden bis zu der Temperatur T₁.

Das Absenken der Temperatur kann beispielsweise nach einer gewissen Zeitdauer erfolgen. Diese Zeitdauer kann beispielsweise der Zeitspanne entsprechen, welche die Flüssigkeit im Primärkreislauf benötigt, um nach Wiederaufnahme des Flusses der Flüssigkeit von dem Einlass 1, durch den Rekuperator 4, den Erhitzer 5, die Heißhaltestrecke 6 und den Rekuperator 4 zu fließen. Durch die höhere Temperatur T₂ des Erhitzers 5 besitzt die Flüssigkeit in der Heißhaltestrecke 6 die Pasteurisierungstemperatur. Daher kann die Flüssigkeit am Rekuperator 4 die zum Vorwärmen der einfließenden Flüssigkeit notwendige Wärme abgegeben, so dass die Temperatur T₂ des Erhitzers 5 schlagartig auf die Temperatur T₁ abgesenkt werden kann und vorzugsweise auch abgesenkt werden sollte, um eine Temperatur zu vermeiden, die über der Pasteurisierungstemperatur liegt.

## Patentansprüche

1. Verfahren zum Betrieb einer Pasteurisierungsanlage, wobei die Pasteurisierungsanlage einen Primärkreislauf für ein zu pasteurisierendes Medium und einen Sekundärkreislauf umfasst, wobei der Sekundärkreislauf als Heizkreislauf dient, um das zu pasteurisierende Medium im Primärkreislauf zu erhitzen, das Verfahren umfassend die Schritte:
- Betreiben des Primärkreislaufs und des Sekundärkreislaufs, wobei im Primärkreislauf das zu pasteurisierende Medium fließt und wobei im Sekundärkreislauf ein Heizmittel fließt,
- Ausschieben des zu pasteurisierenden Mediums aus dem Primärkreislauf mittels einer Flüssigkeit, die in den Primärkreislauf eingebracht wird, **gekennzeichnet durch**
- Anhalten des Flusses der Flüssigkeit in dem Primärkreislauf, nachdem der Primärkreislauf mit der Flüssigkeit gefüllt ist, und
- Aufrechterhalten des Flusses des Heizmittels in dem Sekundärkreislauf nach dem Anhalten des Flusses der Flüssigkeit (Wasser oder zu pasteurisierendes Medium) in dem Primärkreislauf, bis zu und nach einer Wiederaufnahme des Flusses der Flüssigkeit in dem Primärkreislauf,
wobei eine Temperatur eines ersten Wärmetauschers (5) ermittelt wird, wobei der erste Wärmetauscher (5) einen thermischen Kontakt zwischen dem Primärkreislauf und dem Sekundärkreislauf ermöglicht und wobei die Temperatur des ersten Wärmetauschers (5) als Funktion der Stillstandzeit des Primärkreislaufs, oder der Temperatur in der Heisshaltestrecke (6) erhöht wird.

2. Verfahren nach Anspruch 1, **dadurch gekennzeichnet, dass** eine erste Temperatur des ersten Wärmetauschers (5) beim Betreiben des Primärkreislaufs und des Sekundärkreislaufs ermittelt wird.

3. Verfahren nach Anspruch 2, **dadurch gekennzeichnet, dass** eine zweite Temperatur des ersten Wärmetauschers (5) nach dem Anhalten des Flusses der Flüssigkeit in dem Primärkreislauf und Aufrechterhalten des Flusses des Heizmittels in dem Sekundärkreislauf ermittelt wird, wobei die zweite Temperatur höher als die erste Temperatur ist.

4. Verfahren nach einem der Ansprüche 1 bis 3, **dadurch gekennzeichnet, dass** eine Temperatur einer Heißhaltestrecke (6), die vom Primärkreislauf umfasst wird, ermittelt wird.

5. Verfahren nach Anspruch 4, **dadurch gekennzeichnet, dass** die Temperatur des ersten Wärmetauschers (5) als Funktion der Temperatur in der Heißhaltestrecke (6) erhöht wird.

6. Verfahren nach Anspruch 4, **dadurch gekennzeichnet, dass** die Stillstandszeit in Abhängigkeit von der Temperatur in der Heisshaltestrecke (6) automatisch oder manuell durch wieder anfahren des Primärkreislaufes beendet wird.

7. Verfahren nach einem der Ansprüche 1 bis 6, **dadurch gekennzeichnet, dass** der Fluss der Flüssigkeit in dem Primärkreislauf aufgenommen wird, wobei zu pasteurisierendes Medium in den Primärkreislauf eingebracht wird und wobei durch dieses Einbringen die Flüssigkeit aus dem Primärkreislauf ausgeschoben wird.

8. Verfahren nach einem der Ansprüche 1 bis 7, **dadurch gekennzeichnet, dass** das zu pasteurisierende Medium einen zweiten Wärmetauscher (4) durchfließt, der vom Primärkreislauf umfasst wird, und dabei in Abhängigkeit von der Temperatur des ersten Wärmetauschers (5) eine Temperatur beibehält oder auf eine Temperatur vorgewärmt wird.

9. Verfahren nach Anspruch 7 oder 8, sofern rückbezogen auf Anspruch 2, **dadurch gekennzeichnet, dass** die Temperatur des ersten Wärmetauschers (5) nach der Wiederaufnahme des Flusses der Flüssigkeit in dem Primärkreislauf auf die erste Temperatur abgesenkt wird.

10. Verfahren nach einem der Ansprüche 1 bis 9, **dadurch gekennzeichnet, dass** mittels eines dritten Wärmetauschers (9) das Heizmittel in dem Sekundärkreislauf erhitzt, abgekühlt oder auf einer konstanten Temperatur gehalten wird.

11. Verfahren nach Anspruch 1, **dadurch gekennzeichnet, dass** beim Betreiben des Primärkreislaufs und des Sekundärkreislaufs zudem ein Kühlkreislauf, in dem ein Kühlmittel fließt, betrieben wird und wobei der Fluss des Kühlmittels in dem Kühlkreislauf zusammen mit dem Fluss der Flüssigkeit in dem Primärkreislauf angehalten wird.

12. Verfahren nach Anspruch 1113, **dadurch gekennzeichnet, dass** der Fluss des Kühlmittels in dem Kühlkreislauf nach oder bei Aufnahme des Flusses der Flüssigkeit in dem Primärkreislauf aufgenommen wird.

13. Verfahren nach Anspruch 11 oder 12, soweit rückbezogen auf Anspruch 8, **dadurch gekennzeichnet, dass** beim Betreiben des Primärkreislaufs und des Sekundärkreislaufs und somit beim Betreiben des Kühlkreislaufs das pasteurisierte Medium bei Durchfließen eines Wärmetauschers (16) abgekühlt wird, wobei dieser Wärmetauscher einen thermischen Kontakt zu dem Kühlkreislauf ermöglicht.

14. Pasteurisierungsanlage, umfassend einen Primärkreislauf und einen Sekundärkreislauf, bei der eine Steuerung vorgesehen ist zum Durchführen eines der Verfahren nach einem der Ansprüche 1 bis 13.

## Claims

1. A method for operating a pasteurizing system, with the pasteurizing system comprising a primary circuit for a medium to be pasteurized and a secondary circuit, the secondary circuit serving as a heating circuit to heat the medium to be pasteurized in the primary circuit, the method comprising the steps of:
- operating the primary circuit and the secondary circuit, wherein the medium to be pasteurized flows in the primary circuit, and wherein a heating means flows in the secondary circuit;
- discharging the medium to be pasteurized out of the primary circuit by means of a liquid which is introduced into the primary circuit;
**characterized by**
- stopping the flow of the liquid in the primary circuit after the primary circuit has been filled with the liquid; and
- maintaining the flow of the heating means in the secondary circuit after the flow of the liquid (water or medium to be pasteurized) has been stopped in the primary circuit until and after resumption of the flow of the liquid in the primary circuit,
wherein a temperature of a first heat exchanger (5) is determined, the first heat exchanger (5) permitting thermal contact between the primary circuit and the secondary circuit and wherein the temperature of the first heat exchanger (5) is raised as a function of the standstill time of the primary circuit or the temperature in the heat holding path (6).

2. The method according to claim 1, **characterized in that** a first temperature of the first heat exchanger (5) is determined during operation of the primary circuit and the secondary circuit.

3. The method according to claim 2, **characterized in that** a second temperature of the first heat exchanger (5) is determined after the flow of the liquid in the primary circuit has been stopped and the flow of the heating means in the secondary circuit has been maintained, wherein the second temperature is higher than the first temperature.

4. The method according to any one of claims 1 to 3, **characterized in that** a temperature of a heat holding path (6), which is comprised by the primary circuit, is determined.

5. The method according to claim 4, **characterized in that** the temperature of the first heat exchanger (5) is raised as a function of the temperature in the heat holding path (6).

6. The method according to claim 4, **characterized in that** the standstill time is terminated depending on the temperature in the heat holding path (6) either automatically or manually by restarting the primary circuit.

7. The method according to any one of claims 1 to 6, **characterized in that** the flow of the liquid in the primary circuit is started, with medium to be pasteurized being introduced into the primary circuit and the liquid being discharged out of the primary circuit by way of said introduction.

8. The method according to any one of claims 1 to 7, **characterized in that** the medium to be pasteurized flows through a second heat exchanger (4) which is comprised by the primary circuit, thereby maintaining a temperature depending on the temperature of the first heat exchanger (5), or being preheated to a temperature.

9. The method according to claim 7 or 8, if appended to claim 2, **characterized in that** the temperature of the first heat exchanger (5) is lowered to the first temperature after resumption of the flow of the liquid in the primary circuit.

10. The method according to any one of claims 1 to 9, **characterized in that** the heating means is heated, cooled, or kept at a constant temperature in the secondary circuit by means of a third heat exchanger (9).

11. The method according to claim 1, **characterized in that** during operation of the primary circuit and of the secondary circuit a cooling circuit in which a coolant is flowing is also operated, and wherein the flow of the coolant in the cooling circuit is stopped together with the flow of the liquid in the primary circuit.

12. The method according to claim 11, **characterized in that** the flow of the coolant in the cooling circuit is started after or upon start of the flow of the liquid in the primary circuit.

13. The method according to claim 11 or 12, as far as appended to claim 8, **characterized in that** during operation of the primary circuit and the secondary circuit and thus during operation of the cooling circuit the pasteurized medium is cooled while flowing through a heat exchanger (16), said heat exchanger permitting thermal contact with the cooling circuit.

14. A pasteurizing system, comprising a primary circuit and a secondary circuit, wherein a controller is provided for performing one of the methods according to any one of claims 1 to 13.

## Revendications

1. Procédé destiné au fonctionnement d'une installation de pasteurisation, l'installation de pasteurisation comprenant un circuit primaire pour un produit à pasteuriser et un circuit secondaire, le circuit secondaire servant de circuit chauffant pour échauffer le produit à pasteuriser dans le circuit primaire, le procédé comprenant les étapes suivantes :
- fonctionnement du circuit primaire et du circuit secondaire, le produit à pasteuriser s'écoulant dans le circuit primaire, et un agent chauffant s'écoulant dans le circuit secondaire,
- refoulement du produit à pasteuriser hors du circuit primaire à l'aide d'un liquide, que l'on introduit dans le circuit primaire,
**caractérisé par**
- un arrêt de l'écoulement du liquide dans le circuit primaire après que le circuit primaire ait été rempli avec le liquide, et
- un maintien de l'écoulement de l'agent chauffant dans le circuit secondaire après l'arrêt de l'écoulement du liquide (eau ou produit à pasteuriser) dans le circuit primaire, jusqu'à et après une reprise de l'écoulement du liquide dans le circuit primaire,
procédé
d'après lequel on détermine une température d'un premier échangeur de chaleur (5), d'après lequel le premier échangeur de chaleur (5) permet un contact thermique entre le circuit primaire et le circuit secondaire, et d'après lequel la température du premier échangeur de chaleur (5) est augmentée en tant que fonction du temps d'arrêt du circuit primaire, ou de la température dans le parcours de maintien au chaud (6).

2. Procédé selon la revendication 1, **caractérisé en ce que** l'on détermine une première température du premier échangeur de chaleur (5) lors du fonctionnement du circuit primaire et du circuit secondaire.

3. Procédé selon la revendication 2, **caractérisé en ce que** l'on détermine une deuxième température du premier échangeur de chaleur (5) après l'arrêt de l'écoulement du liquide dans le circuit primaire et le maintien de l'écoulement de l'agent chauffant dans le circuit secondaire, la deuxième température étant plus élevée que la première température.

4. Procédé selon l'une des revendications 1 à 3, **caractérisé en ce que** l'on détermine une température d'un parcours de maintien au chaud (6), qui est englobé par le circuit primaire.

5. Procédé selon la revendication 4, **caractérisé en ce que** la température du premier échangeur de chaleur (5) est augmentée en tant que fonction de la température dans le parcours de maintien au chaud (6).

6. Procédé selon la revendication 4, **caractérisé en ce que** l'on met fin au temps d'arrêt, de manière automatique ou manuelle, en fonction de la température dans le parcours de maintien au chaud (6), par une nouvelle mise en route du circuit primaire.

7. Procédé selon l'une des revendications 1 à 6, **caractérisé en ce que** l'on met en route l'écoulement du liquide dans le circuit primaire, du produit à pasteuriser étant introduit dans le circuit primaire et cette introduction conduisant à refouler le liquide hors du circuit primaire.

8. Procédé selon l'une des revendications 1 à 7, **caractérisé en ce que** le produit à pasteuriser s'écoule à travers un deuxième échangeur de chaleur (4), qui est englobé par le circuit primaire, et, à cette occasion, conserve une température ou est préchauffé à une température, en fonction de la température du premier échangeur de chaleur (5).

9. Procédé selon la revendication 7 ou la revendication 8, dans la mesure où elles sont rattachées à la revendication 2, **caractérisé en ce que** l'on abaisse la température du premier échangeur de chaleur (5) à la première température, après la reprise de l'écoulement du liquide dans le circuit primaire.

10. Procédé selon l'une des revendications 1 à 9, **caractérisé en ce qu'**à l'aide d'un troisième échangeur de chaleur (9), l'agent chauffant est échauffé, refroidi ou maintenu à une température constante dans le circuit secondaire.

11. Procédé selon la revendication 1, **caractérisé en ce que** lors du fonctionnement du circuit primaire et du circuit secondaire, on fait fonctionner, en supplément, un circuit de refroidissement dans lequel s'écoule du fluide de refroidissement, et l'on arrête l'écoulement du fluide de refroidissement dans le circuit de refroidissement, en commun avec l'écoulement du liquide dans le circuit primaire.

12. Procédé selon la revendication 11, **caractérisé en ce que** l'écoulement du fluide de refroidissement dans le circuit de refroidissement est mis en route après la mise en route ou lors de la mise en route de l'écoulement du liquide dans le circuit primaire.

13. Procédé selon la revendication 11 ou la revendication 12 dans la mesure où elles se rattachent à la revendication 8, **caractérisé en ce que** dans le cas du fonctionnement du circuit primaire et du circuit secondaire et ainsi lors du fonctionnement du circuit de refroidissement, le produit pasteurisé est refroidi lorsqu'il s'écoule à travers un échangeur de chaleur (16), cet échangeur de chaleur permettant un contact thermique avec le circuit de refroidissement.

14. Installation de pasteurisation comprenant un circuit primaire et un circuit secondaire, et dans laquelle est prévue une commande pour la mise en oeuvre de l'un des procédés selon l'une des revendications 1 à 13.
